Europäisches Patentamt

European Patent Office

Office européen des brevets

(19)

(11) Numéro de publication : **0 099 801**
**B2**

(12) **NOUVEAU FASCICULE DE BREVET EUROPÉEN**

(45) Date de publication du nouveau fascicule du brevet :
24.01.90

(51) Int. Cl.⁵ : **D 04 H   1/00**

(21) Numéro de dépôt : **83401381.5**

(22) Date de dépôt : **05.07.83**

(54) Procédé et dispositif pour la formation de feutre de fibres contenant un produit additionnel.

(30) Priorité : 06.07.82 FR 8211813

(43) Date de publication de la demande :
01.02.84 Bulletin 84/05

(45) Mention de la délivrance du brevet :
09.10.85 Bulletin 85/41

(45) Mention de la décision concernant l'opposition :
24.01.90 Bulletin 90/04

(84) Etats contractants désignés :
AT BE CH DE FR GB IT LI LU NL SE

(56) Documents cités :
EP–A– 0 027 277
DE–B– 2 223 683
GB–A– 1 141 815
JP–A–55 026 220
NO–A–    94 151
US–A– 2 702 069
US–A– 3 745 060
US–A– 4 201 247

(73) Titulaire : ISOVER SAINT-GOBAIN
Les Miroirs 18, avenue d'Alsace
F-92400 Courbevoie (FR)

(72) Inventeur : Debouzie, Alain
37 rue Racine
F-76500 Petite Couronne (FR)
Inventeur : Nouvier, Daniel
8 Place de la République
F-76000 Rouen (FR)

(74) Mandataire : Le Vaguerese, Sylvain Jacques et al
SAINT-GOBAIN RECHERCHE 39, quai Lucien Lefranc
F-93304 Aubervilliers Cedex (FR)

EP 0 099 801 B2

## Description

L'invention est relative à la production de matelas ou feutre de fibres dans lequel un produit additionnel est introduit.

La formation de feutre de fibres minérales est obtenue par des procédés bien connus. Ordinairement la formation du feutre suit immédiatement la production des fibres à partir de la masse de matériau fondu. Les fibres qui viennent d'être formées sont en suspension dans un courant gazeux qui sert à leur étirage, leur refroidissement, leur transport, ou à plusieurs de ces fonctions simultanément. Le courant gazeux est filtré sur un tapis convoyeur perforé qui retient les fibres en un assemblage enchevêtré constituant le feutre. Pour donner à ce feutre une stabilité mécanique, une composition de liant est pulvérisée sur le trajet des fibres précédant la réception sur le tapis convoyeur. Cette composition de liant est ordinairement à base de résine, notamment de résine formophénolique ou analogue.

Le passage ultérieur du matelas enduit dans une enceinte de traitement thermique qui peut être le cas échéant une simple étuve, assure le durcissement du liant et fixe les caractéristiques dimensionnelles et mécaniques du matelas fibreux, lequel est habituellement ensuite découpé et conditionné en fonction de l'utilisation envisagée.

Au cours du conditionnement une opération traditionnelle consiste en la découpe des deux bords du feutre pour mettre celui-ci aux dimensions précises requises et simultanément éliminer les irrégularités qui peuvent se former sur les bords de ce feutre.

Il est apparu que pour certaines utilisations spécifiques, il était intéressant en outre d'introduire dans la masse fibreuse du feutre des produits ou compositions qui modifient ou font apparaître des propriétés que ne présente pas le feutre préparé à l'aide uniquement des fibres et du liant.

Ainsi pour l'usage le plus répandu de ce type de feutre de fibres, à savoir la formation de matériaux isolants thermiques et acoustiques, il est avantageux dans certains cas, d'introduire un agent hydrophobe pour protéger les fibres contre les dégradations causées par l'eau ou par l'humidité atmosphérique. Dans d'autres cas, au contraire, on s'est efforcé d'améliorer le caractère hydrophile de ces produits pour les utiliser par exemple comme substrat de cultures effectuées « sans sol », nommées également cultures hydroponiqués.

La modification des propriétés des feutres de fibres fixées par un liant pose le problème du mode d'introduction dans le matelas des produits susceptibles de modifier ses propriétés. Ordinairement les produits additionnels introduits sont sous forme liquide, mais il peut aussi s'agir de constituants sous forme solide, notamment sous forme de poudre, comme décrit notamment dans le brevet FR-A-1 531 488.

La constitution chimique des produits introduits et aussi leur forme physique peuvent soulever des difficultés et d'autant plus que la distribution du produit additionnel dans le feutre doit être plus homogène.

Il a été proposé, par exemple par le brevet US 2 189 840, de projeter des produits additionnels de la même façon que celle utilisée pour appliquer le liant, c'est-à-dire en pulvérisant les produits en question dans le courant gazeux véhiculant les fibres vers le tapis convoyeur de réception.

Il a même été envisagé de réunir la composition de liant et les produits additionnels pour ne procéder qu'à une pulvérisation. Cette méthode qui permet éventuellement un traitement homogène des fibres et par suite du feutre formé n'est pas utilisable dans tous les cas, par exemple, lorsque l'agent additionnel réagit avec la composition de liant aboutissant à l'inactivation desdits produits ou à une dégradation des composants du liant. C'est aussi le cas éventuellement lorsque par suite d'une disproportion très importante entre les quantités de liants et de produits additionnels, ces derniers se trouvent captifs du liant et que leur action est masquée ou amoindrie.

Par ailleurs, pour certains produits il apparaît désavantageux de procéder à une dispersion dans le courant gazeux chargé de fibres de la façon utilisée pour le liant. En effet, les produits finement dispersés, compte tenu des conditions dans lesquelles cette opération est habituellement effectuée, ne se fixent jamais en totalité sur les fibres. Une part non négligeable de ces produits en suspension dans le courant gazeux, passe le tapis convoyeur de réception et est entraînée dans les gaz rejetés hors de l'installation. Il va de soi que les gaz avant leur rejet dans l'atmosphère subissent un traitement qui les rend conformes aux exigences en matière de lutte contre la pollution. Néanmoins ces traitements sont coûteux et parfois difficiles à mettre en œuvre, aussi, dans toute la mesure du possible est-il préférable de faire en sorte que les gaz effluents soient les moins chargés possible.

C'est une des raisons pour lesquelles d'autres techniques d'introduction de produits additionnels ont été proposées. Parmi ces techniques il faut citer celles dans lesquelles le feutre très mince ou le voile de fibres, est imbibé d'une composition liquide soit par trempage du feutre dans un bac soit en faisant couler la composition sur l'ensemble du feutre. Ces techniques nécessitent ensuite un essorage du feutre et ne peuvent être envisagées que pour des produits minces. Lorsque l'épaisseur du feutre atteint plusieurs centimètres l'élimination du liquide excédentaire et le séchage deviennent trop laborieux pour être conduits économiquement.

D'autres techniques ont été envisagées qui se heurtent au manque d'homogénéité du traitement. Ainsi une pulvérisation sur le feutre ne permet pas une pénétration uniforme du produit additionnel. Celui-ci se trouve concentré dans une couche superficielle.

L'invention a pour but de fournir une nouvelle technique pour l'introduction de produits additionnels dans des feutres de fibres minérales préparés suivant le mode indiqué précédemment, technique qui conduise à une distribution homogène des produits additionnels et à des propriétés, découlant de la présence de ces produits, uniformes dans la masse du feutre de fibres.

L'invention a également pour but de proposer une technique qui n'oblige pas à des traitements supplémentaires des effluents gazeux et de façon générale ne modifie pas les conditions habituelles de formation du feutre de fibres telles que celles-ci sont définies en l'absence de ces produits additionnels.

Selon l'invention les produits additionnels sont introduits dans le feutre avec des fibres recyclées. Nous avons indiqué plus haut qu'en particulier lors de la mise à la dimension, les lisières du feutre étaient découpées. Il se forme ainsi des produits fibreux en quantité variable, qui ne sont pas directement utilisés dans le matelas. Ces produits fibreux, ainsi éventuellement que d'autres fibres provenant d'autres sources, sont traditionnellement additionnés aux fibres nouvellement formées pour être réincorporés dans le feutre en formation.

Les fibres recyclées lorsqu'elles ont été liées au préalable sont ramenées à une forme compatible avec une répartition suffisamment homogène. Ainsi les lisières qui sont coupées sur le feutre sortant du traitement thermique passent ordinairement dans un broyeur ou une déchiqueteuse qui restitue des particules dont les dimensions sont de l'ordre du centimètre ou moins. Ordinairement on préfère que les particules soient inférieures à 15 mm.

L'introduction de ces produits recyclés, lorsque les dimensions sont suffisamment petites, non seulement permet une distribution homogène mais encore ne modifie pas de façon sensible les propriétés, notamment mécaniques, du feutre en formation. La structure intime du matériau reste sensiblement la même. Pour cette raison la proportion de produit recyclé par rapport à l'ensemble des produits entrant dans la constitution du feutre peut être relativement importante. Cette proportion peut atteindre ou même dépasser 20 %, le plus couramment la proportion de produit recyclée est de l'ordre de 10 % ou moins.

Selon l'invention l'introduction de produits additionnels est donc effectuée avec les fibres recyclées. A cet effet, les produits additionnels sont déposés sur les fibres par les moyens appropriés correspondant à leur état physique. Des produits pulvérulents peuvent être mélangés aux fibres et éventuellement fixés au moyen d'une composition faisant office de liant. Les produits liquides sont pulvérisés sur les fibres ou bien s'écoulent sur celles-ci pour les imprégner. Les fibres peuvent aussi être trempées directement dans le produit additionnel ou dans une solution de celui-ci. En effet, à ce stade de l'opération, les problèmes de séchage dont il a été question plus haut ne se posent pas comme pour le feutre de fibres lui-même. Cette opération de séchage ou d'essorage ne concerne en effet qu'une fraction des fibres constituant le matelas. En outre, le principe même du recyclage conduit les fibres portant le produit additionnel à un nouveau passage dans l'enceinte de traitement thermique. Une opération de séchage distincte est par suite le plus souvent superflue.

Par ailleurs l'imprégnation des fibres recyclées, même si celles-ci constituent une part importante du matériau de formation du feutre, ne conduit pas à une surcharge telle qu'elle pourrait aboutir à un affaissement du feutre avant son étuvage. Comme nous le verrons plus loin, notamment dans les exemples de mise en œuvre, la quantité de produits additionnels introduits dans les feutres représente habituellement une charge très modeste par rapport à l'ensemble de la masse de fibres, c'est-à-dire des fibres recyclées et des fibres nouvellement formées. Dans l'ensemble et particulièrement lorsque les produits additionnels sont liquides, leur masse ne dépasse pas ordinairement 5 % de la masse totale du feutre et se situe le plus souvent à des valeurs de l'ordre de 3 % ou moins.

Si la proportion de produits additionnels introduite dans le feutre est relativement faible, rapportée aux fibres recyclées la masse de ces produits additionnels peut être importante. Les seules limites dans ce domaine sont d'ordre pratique. Les produits ajoutés doivent pouvoir se fixer sur les fibres recyclées. La quantité que l'on peut introduire dans ces conditions dépend bien évidemment de l'aptitude du produit à adhérer à la fibre.

De la façon générale de la masse du produit additionnel n'est pas supérieure à 50 % de la masse des fibres recyclées et de préférence inférieure à 25 %.

Un avantage de l'utilisation des fibres recyclées pour véhiculer les produits additionnels dans le feutre est, comme nous l'avons vu, de permettre une bonne distribution de ces produits dans toute la masse et ceci sans avoir à traiter la totalité des fibres. Pour aboutir à cette distribution il va de soi qu'il est nécessaire d'avoir une répartition des fibres recyclées. Cette répartition homogène est obtenue en faisant en sorte que les fibres recyclées parviennent sur le tapis convoyeur où se forme le feutre avec les fibres nouvelles.

Le mélange des fibres nouvelles et recyclées peut être effectué en n'importe quel point du trajet menant les fibres du dispositif de formation jusqu'au tapis convoyeur. Les turbulences qui se forment dans le courant gazeux porteur assurent un brassage et un mélange pratiquement instantané.

Le transport des fibres recyclées jusqu'à la chambre où se forme le feutre est effectué à l'aide d'un courant gazeux qui en pénétrant dans cette chambre se mélange à ceux portant les fibres nouvelles.

Les produits additionnels introduits selon l'invention dans le feutre de fibres au moyen des fibres recyclées peuvent être très variés. Il peut s'agir par exemple de produits qui modifient les caractéristiques mécaniques du produit, notamment qui lui confèrent un touché doux, par exemple des silicones. Il peut s'agir aussi de produits qui modifient la résistance du feutre à certains agents notamment de l'humidité atmosphérique. Il peut s'agir encore d'agents spécifiques d'une utilisation donnée du feutre par exemple de particules de silice pour améliorer encore la tenue à haute température, ou d'agent mouillant lorsque le produit est destiné à la culture sans sol et qu'il convient dans ce cas de lui conférer un caractère hydrophile nettement marqué.

Il est aussi intéressant par la technique selon l'invention d'introduire des produits de marquage du feutre notamment des produits colorants par exemple pour en faciliter l'identification.

La technique selon l'invention permet également l'introduction de produits que les techniques antérieures ne permettaient pas d'envisager. C'est le cas par exemple des produits qui ne pouvaient être introduits qu'en solution dans des solvants inflammables.

Les températures atteintes au voisinage des fibres et le confinement relatif des courants gazeux auraient conduit avec ces solvants à des risques évidents d'inflammation voire même d'explosion.

En procédant selon l'invention, l'emplacement de l'introduction des produits additionnels sur les produits recyclés peut être tel qu'aucun risque de ce genre n'existe. Il est notamment possible lorsqu'on est conduit à utiliser des solvants inflammables, après application sur les fibres recyclées, d'évaporer le solvant et de l'éliminer avant l'introduction des fibres recyclées dans la chambre de réception.

Dans la suite l'invention est décrite en détail pour certains modes de réalisation en faisant référence aux planches de dessins annexées dans lesquelles :

— la figure 1 est un schéma d'ensemble d'une installation de production d'un feutre de fibres,

— la figure 2 présente schématiquement en perspective la partie d'une installation où sont découpées et traitées, selon l'invention, les lisières d'un feutre de fibres,

— La figure 3 montre en perspective avec une partie enlevée un schéma de déchiqueteuse pour la réduction des fibres recyclées à des dimensions compatibles avec leur réintroduction dans le feutre en formation,

— la figure 4 présente un autre mode d'introduction de produits additionnels sur des fibres recyclées selon l'invention,

— la figure 5 est un schéma en perspective de la chambre de réception de fibres nouvellement formées montrant un recyclage de fibres.

L'introduction de produits additionnels sur des fibres recyclées dans la zone de formation du feutre peut être effectuée dans toute installation comportant ce type de recyclage. Le recyclage lui-même, c'est-à-dire l'introduction de fibres sous forme dispersée ou sous forme de petites particules liées, peut se pratiquer dans tous les procédés dans lesquels les fibres nouvellement formées, portées par un courant gazeux, passent dans une chambre de réception volumineuse par rapport au courant gazeux mis en œuvre, et dans laquelle les fibres se déposent sur un convoyeur filtrant. La façon dont les fibres sont formées n'est pas déterminante pour la possibilité d'effectuer un recyclage. Eventuellement la quantité des produits doit être considérée dans la mesure où la proportion de produit recyclé peut influencer les propriétés du produit final.

En réduisant les dimensions de particules recyclées et surtout en maintenant la proportion de matériau recyclé dans les limites précisées précédemment, les modifications des propriétés propres au matelas de fibres sont relativement faibles.

A titre indicatif, le recyclage des fibres portant un produit additionnel peut être associé à un étirage centrifuge avec un courant gazeux. Les techniques d'étirage traditionnelles sont par exemple les méthodes bien connues dans lesquelles le matériau en fusion est projeté par centrifugation en passant par les orifices situés dans la paroi périphérique du centrifugeur et les filaments formés sont repris et étirés par un courant gazeux.

Il peut s'agir aussi de techniques dans lesquelles le matériau à fibrer est projeté sur la périphérie d'une série de roues de centrifugation et s'en détache sous forme de fibres entraînées par un courant gazeux.

Il peut s'agir encore des techniques dans lesquelles l'étirage est obtenu uniquement sous l'action de courants gazeux, ou toute autre technique analogue.

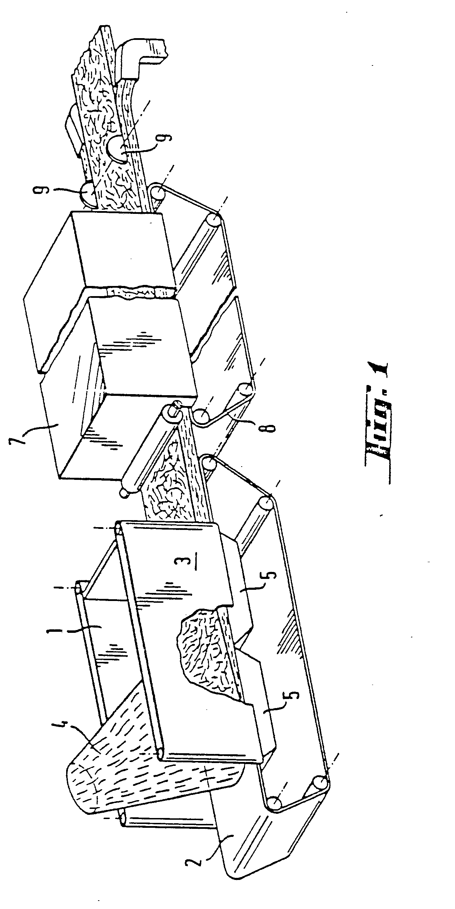

A la figure 1 le mode de formation des fibres n'est pas représenté.

La chambre de réception est figurée en 1. Elle est ordinairement limitée à sa partie inférieure par le tapis confoyeur 2. De façon traditionnelle aussi dans de nombreuses techniques, les parois latérales 3 sont mobiles pour permettre leur nettoyage en continu. La chambre 1 est close à ses deux extrémités et à sa partie supérieure par des parois fixes. La paroi supérieure et celle de la face avant ne sont pas représentées pour rendre le schéma plus compréhensible.

Dans la forme de cette figure, les fibres nouvelles pénètrent dans la chambre 1 par le haut. D'autres dispositions, notamment l'introduction des fibres nouvelles par l'extrémité frontale, sont aussi habituelles.

De même, à la figure 1, une seule source de fibres est indiquée mais il est usuel d'avoir plusieurs postes de formation des fibres fonctionnant simultanément en liaison avec la même chambre de réception.

Les fibres formant un panache 4 porté par un courant gazeux se déposent sur le tapis convoyeur 2 tandis que le gaz porteur est aspiré dans les caissons 5 disposés sous le tapis convoyeur sur toute la longueur de la chambre 1.

L'air aspiré est évacué par des canalisations non représentées.

Les fibres s'accumulant sur le tapis constituent progressivement le feutre 6.

Ordinairement la pulvérisation de liant est faite sur le trajet des fibres en amont de la chambre de réception le plus souvent immédiatement après que les fibres aient été produites. Eventuellement l'enduction peut aussi s'opérer dans la chambre de réception. La pulvérisation le plus tôt possible sur le trajet des fibres est généralement préférée parce qu'elle permet d'atteindre une meilleure homogénéité dans la distribution du liant sur les fibres.

Le feutre 6 enduit de la composition de liant est conduit sur un second convoyeur 8 dans l'enceinte schématisée en 7. Dans cette enceinte il subit un traitement thermique qui fixe le liant à base, par exemple, de résines thermodurcissables ou d'huiles siccatives.

Sortant de l'enceinte 7 les propriétés mécaniques du feutre sont bien stabilisées. Il est alors prêt à être mis à la dimension choisie.

Des systèmes, par exemple des scies circulaires, opèrent des découpes longitudinales notamment pour supprimer les lisières irrégulières. La découpe transversale est réalisée par exemple au moyen d'un massicot ou scie mobile non représentés, de même que ne sont pas représentés les moyens de conditionnement situés à l'extrémité de la ligne de production.

Sur la figure 1 apparaissent de façon très sommaire les premiers éléments d'un des dispositifs de recyclage des lisières qui sont détaillés dans les figures suivantes.

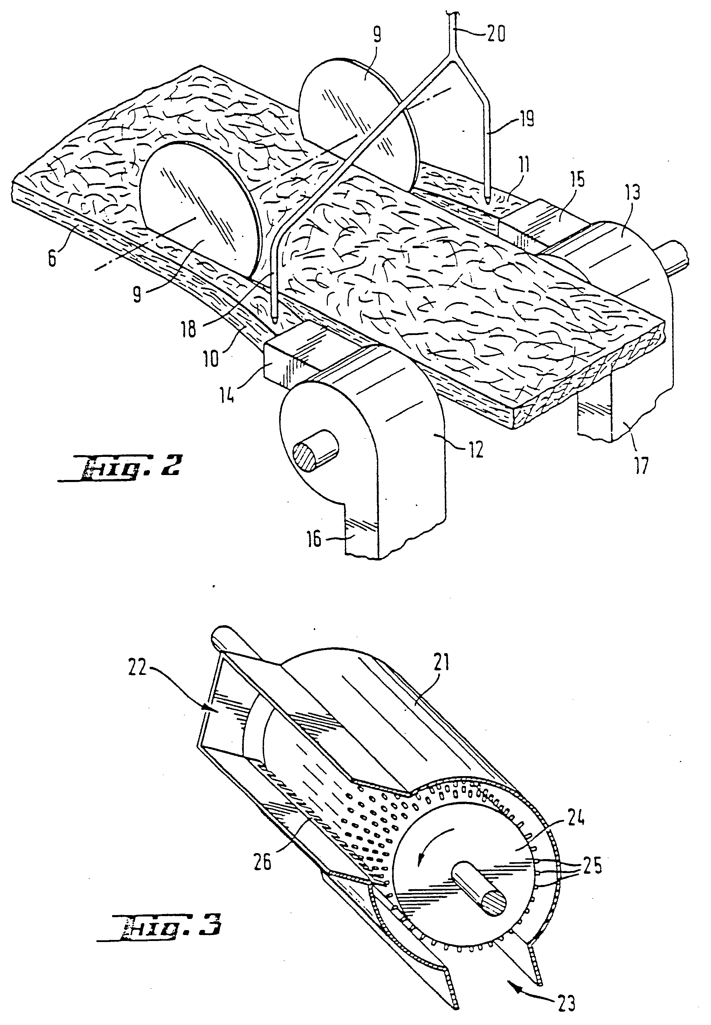

La figure 2 présente, à une échelle plus grande, le feutre de fibres 6 au niveau de la découpe des lisières.

Sur cette figure les deux bords du feutre sont découpés par les scies 9. Les moyens d'entraînement de ces scies ne sont pas représentés. Il s'agit habituellement de moteurs électriques.

A la suite de cette opération, le feutre présente des bords bien francs et réguliers.

Lorsque la largeur du matelas est un multiple de la largeur du produit final, la suppression des lisières est ordinairement combinée avec une découpe longitudinale. Dans ce cas, par exemple, des scies du même type que celles utilisées pour séparer les lisières sont rajoutées dans les positions adéquates.

Les lisières 10 et 11 détachées du feutre des fibres sont acheminées dans des déchiqueteuses 12 et 13 par des conduites 14 et 15.

Les lisières convenablement déchiquetées sont renvoyées dans la chambre de formation du matelas par un circuit de conduites dont on voit l'amorce en 16 et 17.

Toujours à la figure 2 un jeu de canalisations 18, 19, 20 est disposé de façon à pouvoir délivrer une composition liquide sur les lisières 10 et 11. L'alimentation en composition est faite par exemple à partir d'une pompe doseuse non représentée, ou de tout autre moyen analogue.

Sur la figure 2 la canalisation alimente simultanément les deux lisières 10 et 11 par l'intermédiaire des canalisations 18 et 19. Il est également possible de mettre en œuvre deux circuits distincts.

Si la quantité de composition à introduire avec les fibres recyclées est très faible en proportion de ces dernières, il peut être avantageux de ne déverser la composition que sur l'une seulement des deux lisières. Le maintien de débits réguliers très faibles peut être délicat, aussi dans ce cas est-il préférable de ne pas diviser encore l'écoulement pour traiter systématiquement sur les deux lisières. L'homogénéité de la distribution de la composition liquide dans le feutre est en effet plus la conséquence de la distribution aléatoire des particules recyclées, distribution qui s'opère dans la chambre de formation du feutre par suite du brassage auquel sont soumises ces particules, que le fait d'une distribution parfaitement homogène de cette composition dans les particules en question.

Pour les mêmes raisons dans le schéma de la figure 2, même si le filet de composition qui s'écoule des canalisations 18 et 19 n'imprègne pas complètement les lisières 10 et 11, cela ne fait pas obstacle à une distribution suffisamment homogène de cette même composition dans le feutre final.

Par ailleurs, dans le cas présenté à cette figure 2, l'imprégnation partielle est effectué avant le déchiquetage qui s'opère en 12 et 13. Le brassage des particules formées, au cours de cette opération et pendant tout le transport jusqu'à la chambre de réception, est un facteur supplémentaire qui favorise la dispersion de la composition sur l'ensemble des fibres recyclées.

Il va de soi que l'introduction sur le feutre des lisières peut être réalisée après découpe de celles-ci comme indiqué à la figure 2 ; il est aussi possible de prévoir l'introduction sur la partie correspondante du feutre avant découpe des lisières sous la seule réserve que le produit introduit soit en quantité telle qu'il ne diffuse pas dans le feutre au-delà de la partie ultérieurement découpée.

La figure 2 présente sur chaque lisière une seule canalisation d'amenée du produit. Il est bien entendu possible d'avoir aussi plusieurs produits sur la lisière. Dans ce dernier cas, l'introduction peut être effectuée sur la même face de la lisière, ou, si cela est plus commode pour des raisons d'imprégnation par exemple, sur plusieurs faces de cette lisière. Ceci peut s'effectuer notamment après retournement partiel de la lisière si le produit est déversé par écoulement ou encore en envoyant sur le côté libre un jet sous pression, ou par tout moyen analogue.

Pour rendre la figure 2 plus claire, les dimensions des lisières par rapport à la largeur du feutre sont très en excès des dimensions effectives usuelles. A titre indicatif pour des feutres de 1,70 m de largeur, les deux lisières ne représentent pas plus de 10 % de la masse des fibres, et cette proportion est encore plus faible pour les feutres de plus grande largeur.

Compte tenu des pourcentages de produits qui peuvent être recyclés on voit qu'il est possible en plus des lisières d'utiliser en complément, le cas échéant, d'autres produits fibreux, notamment des chutes, provenant par exemple du façonnage de certains articles ou encore d'autres lignes de production de feutre dans lesquelles l'introduction de produits recyclés ne serait pas nécessaire ou même souhaitable.

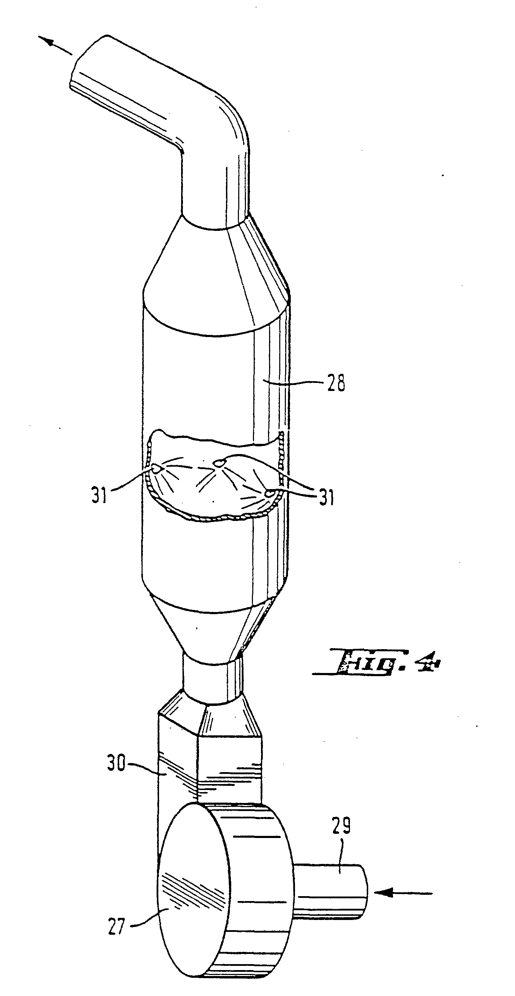

La figure 3 montre de façon schématique un type de déchiqueteuse utilisable dans les installations comprenant un recyclage de produits.

La déchiqueteuse est essentiellement constituée par un tambour 21 comportant deux ouvertures longitudinales 22, 23. Par la première ouverture 22 les produits à déchiqueter par exemple les lisières, sont introduits dans le tambour. La seconde ouverture 23 permet l'évacuation des particules de fibres. A l'intérieur du tambour 21 est disposé un cylindre 24 muni d'ergots 25. Le cylindre 24 est entraîné en rotation par un moteur extérieur non représenté.

Le mouvement du cylindre est celui indiqué par la flèche. Les produits fibreux entraînés sont cisaillés entre les ergots 25 du cylindre et les dents d'un peigne 26. Les positions des dents du peigne et celles des ergots sont complémentaires. Ainsi le produit entraîné est haché au passage du peigne.

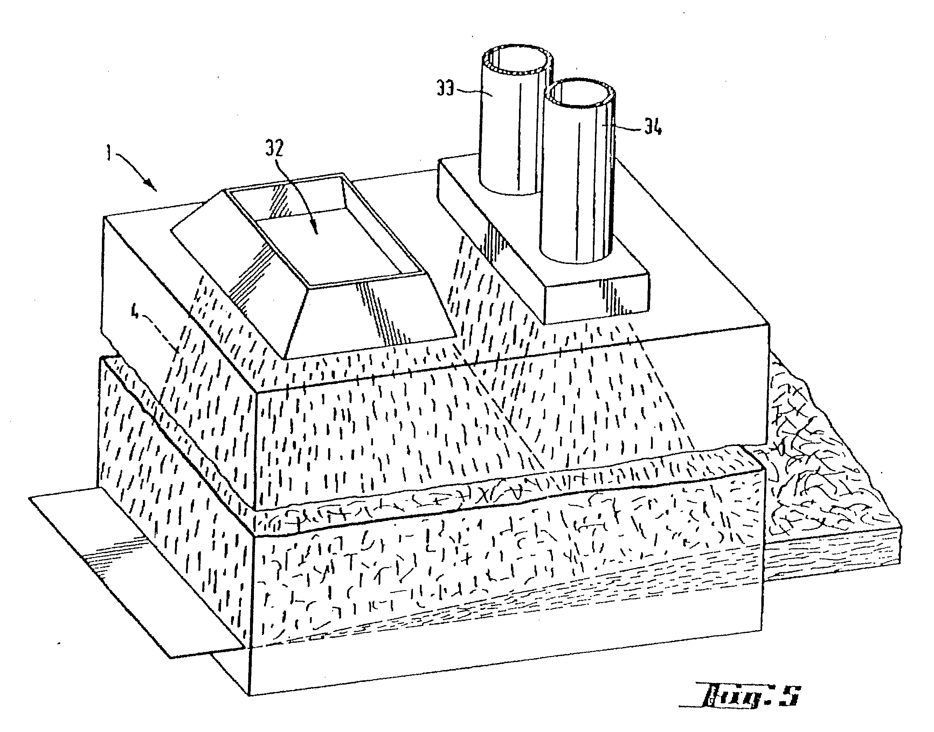

La figure 4 présente une partie d'un circuit de recyclage de produit fibreux comprenant un dispositif d'introduction de composition liquide par pulvérisation de cette composition sur les fibres recyclées.

La partie du circuit représentée se situe en aval de la déchiqueteuse et comprend d'une part un ventilateur 27 et une chambre de pulvérisation 28.

Le ventilateur aspire l'air par la conduite 29 et le refoule par la conduite 30. Les caractéristiques du ventilateur sont choisies de façon que la vitesse et le débit du courant d'air engendré permettent l'entraînement des fibres et l'absence de dépôt dans l'ensemble du circuit de recyclage.

Bien que ce ventilateur soit représenté associé au système de pulvérisation, il va de soi qu'un ventilateur est également utilisé lorsque l'introduction du produit additionnel est pratiquée comme indiqué à la figure 2.

Le ventilateur est indifféremment disposé en amont ou en aval de la chambre de pulvérisation 28. De même ces dispositifs peuvent être proches ou éloignés l'un de l'autre.

Dans le mode représenté la chambre de pulvérisation est constituée par un cylindre de section élargie par rapport à celle des conduites du circuit. Dans ce cylindre la vitesse de passage de l'air et des fibres est donc réduite, ce qui facilite la pulvérisation. L'emplacement de trois buses de pulvérisation est indiquée en 31.

Suivant les conditions de circulation du courant gazeux et de pulvérisation, il est éventuellement possible de faire l'économie de la chambre et de pulvériser directement dans la canalisation de recyclage.

Bien qu'ordinairement un seul dispositif d'introduction et un seul type de produit additionnel soient envisagés dans une production déterminée, la technique selon l'invention concerne aussi le cas où l'introduction d'un ou plusieurs produits additionnels serait pratiquée en plusieurs fois sur le circuit de recyclage des fibres.

On peut envisager en particulier l'introduction successive d'un produit pulvérulent et d'une composition liquide ou de deux compositions liquides distinctes, etc...

La figure 5 présente la chambre de formation du matelas de fibres avec l'extrémité du circuit de recyclage. Sur cette figure les proportions ne sont pas respectées. Une partie de la chambre dans le sens de la hauteur est omise pour des raisons de commodité. En effet, pour obtenir un dépôt régulier des fibres, quel que soit leur mode de production, il est nécessaire d'opérer dans une chambre relativement vaste ce qui permet aussi de ralentir ces fibres et d'éviter un écrasement du feutre sur le tapis convoyeur. Quoiqu'il en soit, traditionnellement la chambre de réception 1 est haute et/ou longue par rapport aux dimensions du matelas formé. Le panache de fibres 4 qui pénètre dans la chambre 1 par la trappe 32 tend à s'épanouir et à occuper un maximum de volume dans cette chambre.

Les fibres recyclées sont amenées par les canalisations 33 et 34 au sommet de la chambre. Par suite du brassage intense entre les courants gazeux portant d'une part les fibres nouvelles et d'autre part les fibres recyclées il se forme un mélange intime d'autant mieux réalisé que la trajectoire commune est plus longue. Les fibres mélangées se déposent sur le tapis dans une répartition aléatoire assurant une distribution pratiquement homogène des fibres recyclées portant le ou les produits additionnels dans l'ensemble du feutre 6.

Les canalisations 33 et 34 correspondent respectivement au recyclage de chacune des deux lisières. Bien entendu ces deux recyclages peuvent être effectués dans la chambre 1 par une canalisation unique, la jonction des deux canalisations initiales étant réalisée en un point quelconque du circuit de recyclage.

De la même manière, des recyclages de fibres supplémentaires peuvent être aménagés associés ou non à une introduction de produits additionnels selon l'invention.

L'invention est décrite maintenant de façon plus détaillée pour un exemple d'application.

Le produit préparé est un feutre de fibres dense capable de servir de support pour la culture dite « sans sol ». Les produits de ce type se caractérisent notamment par leur aptitude à la rétention de l'eau dont on les imbibe. Dans ce but, une certaine quantité d'agent tensio-actif est introduite dans le feutre pour lui conférer (ou accroître) un caractère hydrophile.

Pour préparer ces feutres destinés à la culture sans sol, traditionnellement l'agent tensio-actif est incorporé dans la composition de liant et pulvérisé avec celle-ci sur les fibres en formation.

Cette façon de procéder comporte certains inconvénients. Ainsi en le pulvérisant avec le liant l'agent tensio-actif se comporte vis-à-vis des fibres traitées de la même façon que le liant. En particulier une proportion non négligeable de cet agent, non fixé sur les fibres, se trouve entraînée dans les gaz effluents. Il en résulte tout d'abord une perte de produit qui peut atteindre 30 à 50 % suivant les modes opératoires. Il en résulte surtout des difficultés importantes au niveau des installations de lavage des gaz effluents.

Avant leur rejet dans l'atmosphère les gaz doivent en effet subir un lavage pour en éliminer les composants nocifs. Les agents tensio-actifs introduits dans l'eau de lavage provoquent un moussage abondant qu'il est difficile de maîtriser de façon satisfaisante.

Il est en particulier nécessaire pour éviter une gêne excessive d'avoir recours à des agents antimoussant.

Par ailleurs de façon générale l'introduction d'agents additionnels par les circuits servant normalement à conduire le liant pose des problèmes de nettoyage délicats. En effet il est important du point de vue industriel que les installations puissent servir indifféremment en fonction des impératifs des production pour la formation de feutres d'isolation de type traditionnel comme à celle des feutres contenant des additifs. Il est important dans ce cas que le passage d'une production à l'autre puisse s'effectuer aussi rapidement que possible sans que la qualité des produits puissent en souffrir.

Dans le cas envisagé de la production d'un feutre contenant un agent mouillant il est capital lorsque l'installation est ensuite utilisée pour la formation de feutre d'isolation que l'agent tensio-actif soit parfaitement purgé, ce qui dans le mode d'introduction avec le liant est relativement compliqué et long.

L'opération selon l'invention qui consiste à introduire l'agent mouillant sur les fibres recyclées permet de supprimer ces difficultés.

A titre d'exemple un feutre de fibres est préparé à partir d'un mélange de roches fondues dont la base est constituée par du laitier de hauts fourneaux au moyen du procédé de centrifugation effectuée sur une série de roues tournant en sens inverse l'une de l'autre.

Une résine phénolique en solution aqueuse est pulvérisée sur les fibres en formation par centrifugation de la façon décrite dans la demande de brevet français FR-A-25 004 92.

Après passage au traitement thermique du feutre préparé, le produit présente une densité de l'ordre de 80 kg/m³. Il s'agit donc d'un produit relativement dense.

Le feutre est préparé sur une largeur initiale d'environ 1,70 m. Après étuvage, des lisières sont découpées pour ramener le feutre à une largeur de 1,50 m. Les lisières qui représentent environ 10 % de la masse totale des fibres sont passées dans une déchiqueteuse du type de celle de la figure 3, et réduites en particules qui ne dépassent pas 10 mm. Les produits déchiquetés aspirés par un ventilateur centrifuge sont renvoyés au sommet de la chambre de réception.

Un agent mouillant du type polyepoxyalcool est déversé sur chacune des lisières au moyen d'un dispositif tel que représenté sur la figure 2.

Dans cette disposition il faut remarquer que l'agent mouillant est introduit à l'état pur. On évite ainsi les risques d'erreur de dosage dans la préparation de composition, par exemple celle qui selon les techniques antérieures aurait conduit à mélanger cet agent avec le liant. On évite aussi les erreurs qui peuvent se produire lors des changements de production. En effet, la composition de liant reste inchangée par rapport par exemple à celle utilisée pour la formation de feutre isolant. Le changement s'opère sur un circuit distinct. Il n'y a donc a priori pas de risque de confusion.

Dans le cas considéré, la quantité totale d'agent tensio-actif introduit est de 50 kg environ pour 300 kg de lisière traitée par heure et pour une production de feutre de l'ordre de 3000 kg. Ceci correspond donc à environ 10 % de fibres recyclées et un taux d'additif de 1,6 % de la masse totale du feutre produit.

L'agent mouillant imbibe initialement une partie seulement des lisières. Néanmoins au cours des brassages ultérieurs des fibres recyclées, notamment dans la déchiqueteuse, la dispersion du produit est complétée.

La production de feutre dans ces conditions à permis, vis-à-vis des techniques antérieures, de diminuer de façon sensible la quantité d'agent mouillant nécessaire pour parvenir à un produit présentant les mêmes caractéristiques hydrophiles. Ces dernières sont déterminées notamment par l'aptitude d'un échantillon de feutre traité, placé sur une cuve remplie d'eau, à couler au fond de cette cuve.

Dans la détermination du caractère hydrophile, l'échantillon dont les dimensions sont 100 × 100 × 75 doit être immergé totalement en moins d'une minute.

En plus de la réduction de consommation d'agent tensio-actif on constate que l'agent tensio-actif n'est pas, ou pratiquement pas, entraîné avec les gaz effluents. Après six heures de fonctionnement en continu de l'installation, on ne décèle aucun « moussage » dans les cuves de lavage des effluents, et l'utilisation d'agent antimoussant paraît superflue.

Cette absence d'entraînement du produit additionnel selon l'invention est remarquable. Elle montre que le produit véhiculé avec les fibres recyclées circule en restant solidaire de ces dernières.

Par ailleurs le passage de la production du produit contenant l'agent tensio-actif au feutre isolant peut s'effectuer pratiquement sans interruption de l'installation ou avec une interruption extrêmement brève. On gagne ainsi environ une heure sur le temps nécessaire pour le changement de production accompli avec les techniques antérieures d'introduction de l'agent tensio-actif dans la composition de liant.

## Revendications

1. Procédé de production d'un feutre de fibres minérales liées au moyen d'un liant et contenant un ou plusieurs produits additionnels, dans lequel le feutre est constitué, d'une part, de fibres nouvellement formées à partir d'une masse minérale en fusion par une technique d'étirage des fibres traditionnelle et, d'autre part, de fibres recyclées, les unes et les autres étant envoyées au moyen de courants gazeux dans une chambre de réception sur un tapis convoyeur où elles se déposent de façon intimement mêlées, une composition de liant étant pulvérisée sur le trajet des fibres précédant leur réception sur le tapis convoyeur, caractérisé en ce que le ou les produits additionnels sont déposés sur les fibres recyclées qui leur servent de véhicule vers la chambre de réception.

2. Procédé selon la revendication 1, dans lequel les fibres recyclées proviennent au moins en partie des lisières découpées sur le feutre formé.

3. Procédé selon la revendication 1 ou la revendication 2, caractérisé en ce que les fibres recyclées sont sous forme de particules dont les dimensions n'excèdent pas 15 mm.

4. Procédé selon l'une quelconque des revendications précédentes, caractérisé en ce que les produits additionnels sont à l'état liquide et que leur masse ne représente pas plus de 50 % de la masse des fibres recyclées.

5. Procédé selon la revendication 4, caractérisé en ce que la masse des produits additionnels ne représente pas plus de 20 % de la masse des fibres recyclées.

6. Procédé selon l'une des revendications 4 ou 5, caractérisé en ce que les produits additionnels liquides sont appliqués sous forme d'un filet continu qui s'écoule sur au moins une des lisières avant déchiquetage de celles-ci.

7. Procédé selon l'une des revendications 4 ou 5, caractérisé en ce que les produits additionnels liquides sont pulvérisés sur au moins une partie des fibres recyclées sur le circuit qui les conduit à la chambre de réception et en amont de cette dernière.

8. Installation pour la production d'un feutre de fibres minérales contenant un ou plusieurs produits additionnels comprenant des moyens de production de fibres à partir d'un minéral en fusion et incluant des moyens engendrant des courants gazeux, ces courants acheminant ces fibres jusqu'à une chambre de réception (1) dans laquelle les fibres se déposent sur un tapis convoyeur (2), des moyens pour enduire ces fibres d'une composition de liant sur leur trajet entre leur formation et leur dépôt sur le tapis convoyeur (2), une enceinte (7) dans laquelle le traitement thermique assure la cuisson du liant et la fixation des fibres les unes aux autres, des moyens (33, 34) pour introduire dans la chambre de réception des fibres recyclées constituées de chutes de produits provenant de l'installation elle-même et/ou d'autres sources, caractérisée en ce qu'elle comprend également des moyens (18, 19, 28, 31) pour l'introduction de produits additionnels sur les fibres recyclées.

9. Installation selon la revendication 8, caractérisée en ce que pour l'introduction de produits additionnels liquides une chambre de pulvérisation (28) munie d'une ou plusieurs buses de pulvérisation (31) est disposée sur le trajet des fibres recyclées.

10. Installation selon la revendication 9, caractérisée en ce que pour l'introduction de produits additionnels liquides des moyens (18, 19) assurent l'écoulement de ces produits sur les fibres à recycler.

11. Installation selon l'une quelconque des revendications 8 à 10, caractérisée en ce qu'elle comporte des moyens (9) pour découper les lisières (10, 11), ces lisières formant une partie au moins des produits recyclés.

12. Installation selon la revendication 11, caractérisée en ce que les lisières sont réduites en particules de dimensions adéquates dans des déchiqueteuses (12, 13).

13. Installation selon les revendications 10, 11 et 12, caractérisée en ce que les moyens (18, 19) assurent l'écoulement des produits additionnels en amont des déchiqueteuses (12, 13) sur le circuit de recyclage.

14. Installation selon l'une quelconque des revendications 8 à 13, comprenant en outre un ventilateur (27) sur le circuit de recyclage pour engendrer un courant gazeux qui véhicule les fibres jusqu'à la chambre de réception (1).

15. Application du procédé selon l'une quelconque des revendications 1 à 7, caractérisée en ce qu'en tant que produits additionnels un agent tensio-actif est introduit dans le feutre en quantité suffisante pour conférer au matelas des propriétés hydrophiles.

## Claims

1. Process for the production of a felt of mineral fibres bonded by means of a binder and containing one or more additional products, in which the felt is formed, on the one hand, of fibres freshly formed from a molten mineral mass by a conventional fibre-drawing process and, on the other hand, of recycled fibres, both lots of fibres being conveyed by means of gaseous currents into a receiving chamber on a conveyer belt where they are deposited in an intimately mixed form, a binding compound being sprayed onto the fibre path before they are received on the conveyer belt, characterized in that the additional product or products is or are deposited on the recycled fibres serving as a means of conveying them towards the receiving chamber.

2. Process as claimed in claim 1, wherein the recycled fibres are obtained at least in part from the edges cut from the formed felt.

3. Process as claimed in claim 1 or claim 2, characterized in that the recycled fibres are in the form of particles having dimensions not exceeding 15 mm.

4. Process as claimed in any one of the preceding claims, characterized in that the additional products are in the liquid state and their mass does not amount to more than 50 % of the mass of recycled fibres.

5. Process as claimed in claim 4, characterized in that the mass of additional products does not represent more than 20 % of the the mass of recycled fibres.

6. Process as claimed in one of claims 4 or 5, characterized in that the additional liquid products are applied in the form of a continuous stream flowing over at least one of the edges before the edges are cut up.

7. Process as claimed in one of claims 4 or 5, characterized in that the additional liquid products are atmoized over at least part of the recycled fibres in the circuit which carries them to the receiving chamber and upstream of the latter.

8. Installation for the production of a felt of mineral fibres containing one or more additional products, comprising means for the production of fibres from a moulten mineral and including means for producing gaseous currents, these currents being routed along these fibres to a receiving chamber (1) in which the fibres are deposited on a conveyer belt (2), the means for coating these fibres with a binding compounds on their path between their formation and their deposition on the conveyer belt (2), a container (7) in which the heat treatment cures the binder and fixes the fibres together, means (33, 34) for the introduction into the receiving chamber of recycled fibres consisting of waste products obtained from the installation itself and/or from other sources, characterized in that it also comprises means (18, 19, 28, 31) for the introduction of additional products by way of the recycled fibres.

9. Installation as claimed in claim 8, characterized in that an atomization chamber (28) equipped with one or more atomization nozzles (31) is disposed in the path of the recycled fibres for the introduction of additional liquid products.

10. Installation as claimed in claim 9, characterized in that for the introduction of additional liquid products, means (18, 19) are provided to cause these products to flow over the fibres to be recycled.

11. Installation as claimed in any one of claims 8 to 10, characterized in that it comprises means (9) for cutting off the edges (10, 11), these edges forming at least part of the recycled products.

12. Installation as claimed in claim 11, characterized in that the edges are reduced to particles of suitable dimensions in the cutters (12, 13).

13. Installation as claimed in claims 10, 11 and 12, characterized in that the means (18, 19) provide for the flow of additional liquid products upstream of the cutters (12, 13) in the recycling circuit.

14. Installation as claimed in any one of claims 8 to 13, also comprising a ventilator (27) in the recycling circuit to generate a gaseous current which carries the fibres to the receiving chamber (1).

15. Application of the process as claimed in any one of claims 1 to 7, characterized in that a surface active agent is introduced as an additional product into the felt in a quantity sufficient to confer hydrophilic properties on the mat.

## Patentansprüche

1. Verfahren zur Herstellung eines Vlies aus mit einem Bindemittel gebundenen und ein oder mehrere Zusatzprodukte enthaltenden Mineralfasern, bei dem das Vlies einerseits aus ausgehend von einer geschmolzenen Mineralmasse hergestellten, neu ausgebildeten Fasern durch eine traditionnelle Faserziehtechnik und andererseits aus Recycling-Fasern gebildet wird, wobei die einen wie die anderen mittels Gasströmen in einer Aufnahmekammer auf ein Förderband geleitet werden, wo sie sich in eng vermischter Weise absetzen, und eine Bindemittel-Komposition auf die Bahn der Fasern vor ihrer Aufnahme auf dem Förderband zestäubt wird, dadurch gekennzeichnet, daß das oder die Zusatzprodukte auf die Recycling-Fasern abgesetzt werden, die für sie als Fördermittel zur Aufnahmekammer dienen.

2. Verfahren nach Anspruch 1, dadurch gekennzeichnet, daß die Recycling-Fasern zumindest teilweise aus Rändern stammen, die von dem Vlies abgeschnitten werden.

3. Verfahren nach Anspruch 1 oder 2, dadurch gekennzeichnet, daß die Recycling-Fasern die Form von Partikeln haben, deren Abmessungen 15 mm nicht überschreiten.

4. Verfahren nach Anspruch 1 bis 3, dadurch gekennzeichnet, daß die Zusatzprodukte sich in flüssigem Zustand befinden und daß ihre Masse nicht mehr als 50 % die Masse der Recycling-Fasern ausmacht.

5. Verfahren nach Anspruch 4, dadurch gekennzeichnet, daß die Masse der Zusatzprodukte nicht mehr als 20 % der Masse der Recycling-Fasern ausmacht.

6. Verfahren nach Anspruch 4 oder 5, dadurch gekennzeichnet, daß die flüssigen Zusatzprodukte in Form eines kontinuierlichen Fadens aufgebracht werden, der auf mindestens einem der Ränder abfließt, bevor diese zekleinert werden.

7. Verfahren nach Anspruch 4 oder 5, dadurch gekennzeichnet; daß die flüssigen Zusatzprodukte auf mindestens einem Teil der Recycling-Fasern auf der Kreisbahn zerstäubt werden, die sie zur Aufnahmekammer führt, und zwar stromauf von der letzteren.

8. Anlage zur Herstellung eines Vlies aus ein oder mehrere Zusatzprodukte enthaltenden Mineralfasern, das Mittel zur Produktion von Fasern ausgehend von einem geschmolzenen Mineral aufweist und Mittel umfaßt, die Gasströme erzeugen, wobei diese Ströme die genannten Fasern bis zu einer Aufnahmekammer (1) führen, in der sich die Fasern auf einem Förderband (2) absetzen, Mittel, die geeignet sind, diese Fasern auf ihrem Weg zwischen ihrer Ausbildung und ihrem Absetzen auf dem Förderband (2) mit einer Bindemittel-Komposition zu beaufschlagen, einen Bereich (7), in dem die thermische Behandlung das Ausbacken des Bindemittels und die Fixierung der Fasern aneinander sicherstellt, Mittel (33, 34) zur Einbringung der aus Abfallprodukten aus der Anlage selbst und/oder anderen Quellen stammenden Recycling-Fasern in die Faseraufnahmekammer, dadurch gekennzeichnet, daß sie auch Mittel (18, 19, 28, 31) für die Einbringung der Zusatzprodukte in die Recycling-Fasern aufweist.

9. Anlage nach Anspruch 8, dadurch gekennzeichnet, daß auf der Bahn der Recycling-Fasern eine Zerstäubungskammer (28) mit einer oder mehreren Zerstäuberdüsen (31) für die Einbringung der flüssigen Zusatzprodukte angeordnet ist.

10. Anlage nach Anspruch 9, dadurch gekennzeichnet, daß bei der Einführung von flüssigen Zusatzprodukten Mittel (18, 19) das Abfließen dieser Produkte auf die Recycling-Fasern sicherstellen.

11. Anlage nach einem der Ansprüche 8 bis 9, dadurch gekennzeichnet, daß sie für das Abschneiden der Ränder (10, 11) geeignete Mittel (9) aufweist, wobei diese Ränder zumindest einen Teil der Recycling-Fasern bilden.

12. Anlage nach Anspruch 11, dadurch gekennzeichnet, daß die Ränder in Reißwölfen (12, 13) in Partikel mit adäquaten Abmessungen zerkleinert werden.

13. Anlage nach Anspruch 10, 11 und 12, dadurch gekennzeichnet, daß stromauf von den Reißwölfen (12, 13) Mittel (18, 19) das Abfließen der Zusatzprodukte auf die Recycling-Bahn sicherstellen.

14. Anlage nach Anspruch 8 bis 13, die außerdem auf der Recycling-Bahn einen Ventilator (27) aufweist, um einen Gasstrom herzustellen, der die Fasern bis zur Aufnahmekammer (1) befördert.

15. Anwendung des Verfahrens nach Anspruch 1 bis 7, dadurch gekennzeichnet, daß als Zusatzprodukt ein Tensid in ausreichender Menge in das Vlies eingeführt wird, um dem Vlies hydrophile Eigenschaften zu verleihen.

Fig. 1

*Fig. 2*

*Fig. 3*

2

*Fig. 4*

28

31

31

30

29

27

*Fig.5*